# EUROPÄISCHE PATENTSCHRIFT

(11) **EP 1 184 343 B1**
(45) Veröffentlichungstag und Bekanntmachung des Hinweises auf die Patenterteilung: **24.05.2006**
(21) Anmeldenummer: 01117249.1
(22) Anmeldetag: 17.07.2001
(51) Int. Cl.: C03B 5/225, C03B 5/193

(54) **Vorrichtung zum Läutern einer Glasschmelze**
Apparatus for refining molten glass
Appareil pour le raffinage de verre fondu

(30) Priorität: 01.09.2000 DE 10042975; 21.09.2000 DE 10046709
(43) Veröffentlichungstag der Anmeldung: 06.03.2002
(73) Patentinhaber: Schott AG, 55122 Mainz (DE)
(72) Erfinder: Gohlke, Dirk, Dr., 55126 Mainz (DE); Witte, Jörg, Dr., 64295 Darmstadt (DE); Surges, Nicole, 55411 Bingen (DE); Kissl, Paul, 55127 Mainz (DE); Muschick, Wolfgang, Dr., 55257 Budenheim (DE); Römer, Hildegard, Dr., 61184 Karben (DE)
(74) Vertreter: Weitzel, Wolfgang

(56) Entgegenhaltungen:
- DE-C- 4 313 217
- FR-A- 2 281 327
- US-A- 2 263 549

## Beschreibung

Die Erfindung betrifft ein Verfahren zum Läutern von anorganischen Verbindungen in geschmolzener Form, insbesondere von Glasschmelzen.

Bei der Herstellung von Glas ist es erforderlich, dem Schmelzprozeß einen Läuterprozeß nachzuschalten. Dabei hat das Läutern die Aufgabe, das erschmolzene Glas von physikalisch und chemisch gebundenen Gasen zu befreien. Die Gase müssen entfernt werden, um die Qualität des Endproduktes nicht zu beeinträchtigen.

Es sind zahlreiche Verfahren und Vorrichtungen zum Läutern bekanntgeworden. Dabei gibt es zwei grundsätzliche Möglichkeiten, die gemeinsam oder voneinander getrennt angewandt werden können.

Bei chemischen Läuterverfahren werden der Glasschmelze chemische Läutermittel zugesetzt. Als Läutermittel werden As₂O₃, Sb₂O₃, Na₂SO₄, NaCI und deren Mischungen eingesetzt. Diese Stoffe zersetzen sich in einem für sie typischen Temperaturbereich, unter Bildung von gasförmigen Bestandteilen (Sauerstoff, Schwefeldioxid, Salzsäure). Ein Problem besteht darin, daß die Blasenbildung im wesentlichen durch die Zersetzungstemperatur festgelegt ist und kaum beeinflusst werden kann. Wünschenswert ist es aber, Blasen an bestimmten Orten gezielt entstehen lassen zu können.

Die Verwendung von arsen- oder antimonhaltigen Läutermitteln stellt hinsichtlich der Umweltverträglichkeit, sowohl beim Schmelzprozeß als auch im Produkt, ein Problem dar. Angestrebt werden Verfahren, die auf den Zusatz von toxischen Stoffen verzichten und bei denen keine umweltgefährdeten Stoffe freigesetzt werden.

Eine weitere Möglichkeit, Gasbestandteile aus der Schmelze auszutreiben, besteht darin, daß Gasblasen durch Einblasen eines externen Gases gezielt in die Schmelze eingebracht werden (Düsenblasverfahren, Bubbling) und einen Stoffaustausch bewirken. Aufgrund der Größe der Blasen wird in erster Linie eine Konvektion in der Schmelze erzwungen. Als treibende Kraft für den Stofftransport aus der Schmelze in die Blase wirkt der Konzentrationsunterschied zwischen der in der Schmelze gelösten Gase und der Konzentration des Gasen in der Blase. Das Eindiffundieren von gasförmigen Bestandteilen ist mit einem Wachstum der Blase verbunden, das zur Erhöhung der Aufstiegsgeschwindigkeit führt. Ein sehr effektiver Stoffaustausch zwischen Schmelze und Blase wird durch eine große spezifische Oberfläche (sehr viele kleine Blasen) erreicht. Da Blasen, die durch Düsen in die Schmelze eingebracht werden, einen großen Durchmesser aufweisen (∅~10 cm bis 30 cm), ist der Stoffaustausch und damit die Läuterwirkung realtiv gering (kleine spezifische Oberfläche).

Beispiele für rein physikalische Läuterverfahren mit dem Einführen von externem Gas und Erzeugen von Gasblasen hieraus sind in DE 199 35 686 A1, DE 43 13 217 C1 und EP 0 915 062 A1 beschrieben. Als Bubblinggase werden Luft oder Sauerstoff eingesetzt.

In EP 0 915 062 A1 wird zwar beschrieben, daß durch Variation des Wassergehaltes im Bubblinggas die Blasengröße beeinflußt werden kann, doch ist die Beeinflußbarkeit begrenzt und bei normalen Schmelzviskositäten können bei Verwendung konventioneller Bubblingdüsen mit einer Gasöffnung im Bereich 0,1 bis 10 mm kaum Blasendurchmesser unter 5 cm erreicht werden. Außerdem führt die Wasseratmosphäre in den Bubblinggasen eventuell zu negativen unerwünschten Effekten wie Wasseranreicherungen in der Glasschmelze, die die Glaseigenschaften negativ beeinflussen können.

Es hat nicht an Bemühungen gefehlt, die Größe der Gasblasen des extern eingeblasenen Gases zu minimieren. Dies hat sich jedoch als sehr schwierig erwiesen. Die Viskosität und die Oberflächenspannung der Glasschmelze sorgen nämlich dafür, daß die Blasengröße nicht unter einen bestimmten Wert abgesenkt werden kann. Außerdem stößt die Minimierung der Blasengröße auf rein mechanische Grenzen. Es läßt sich nämlich nur eine bestimmte Zahl von Düsen kleinen Durchmessers auf der zur Verfügung stehenden Fläche unterbringen. Es hat sich ferner folgendes gezeigt: Auch wenn es gelingt, mit großem apparativen Aufwand Blasen relativ kleinen Durchmessers zu erzeugen, so lagern sich diese gleich nach ihrer Bildung aneinander an, so daß hieraus wieder größere Blasen entstehen. Es ist somit mit den bisherigen Mitteln nicht möglich, nachhaltig eine Vielzahl kleiner Blasen zu erzeugen.

US 2 263 549 beschreibt ein Verfahren zum Läutern einer Glasschmelze. Dabei werden Blasen an einer beheizten Elektrode erzeugt.

Zusammenfassend läßt sich folgendes feststellen: Bubbling-Vorrichtungen der genannten Art haben zwar den Vorteil, daß sie frei von Toxizität sind. Sie sind jedoch in der Praxis nicht wirklich effektiv und müssen häufig noch zusätzlich von chemischen Läutermitteln unterstützt werden.

Der Erfindung liegt die Aufgabe zugrunde, ein Verfahren zum Läutern von Schmelzen aus keramischen sowie aus metallischen Materialien, insbesondere von Glasschmelzen anzugeben, die die Nachteile der chemischen Läutermittel nicht aufweisen, die aber eine effektive Läuterung erbringen.

Diese Aufgabe wird durch die Merkmale von Anspruch 1 gelöst.

Die Erfinder haben zunächst erkannt, daß aus externem Gas gebildete Blasen erst dann Bestand in der Schmelze haben, wenn eine gewisse Kleinheit erreicht wird. Die Blasengröße muß nur genügend stark minimiert werden. Eine dramatische Absenkung des Blasendurchmessers gegenüber den bisher erzielten Werten führt zu einer relativ stabilen Blasenbildung.

Der zweite Schritt besteht gemäß der Erfindung in der Wahl eines geeigneten Blasenspenders zum Erzeugen der genannten Mini-Gasblasen sowie zu deren Einleiten in die Schmeize. Ein solcher Spender besteht aus einem Porenkörper - siehe die Beschreibung sowie die Ansprüche.

Das Material des Porenkörpers kann von jeglicher Art sein. Zwei wichtige Hauptgruppen sind Körper aus keramischen Materialien sowie Körper aus Metallen.

Dabei kommen verschiedene Herstellungsarten in Betracht, die zu unterschiedlichen Strukturen der Porenkörper führen. Verwendet man keramische Materialien, so kommen in erster Linie Fritten in Betracht. Verwendet man metallische Materialien, so können Strukturen aus Gewebe, Geflechten, Netzen oder Gittern gewählt werden.

Wird Metall als Material des porösen Körpers verwendet, so hat sich in der Praxis folgendes gezeigt:

Porös gesinterte Fritten, Ronden oder Rohre mit poröser Wandung aus Refraktär-Metallen vornehmlich aus Legierungen auf Basis von Wolfram, Molybdän, Platin, Iridium und Rhodium können dazu eingesetzt werden, gezielt kleine Blasen in die Glasschmelze zu erzeugen, die den Läuterprozeß der Schmelze unterstützen. Die untersuchten Fritten weisen eine Porösität von 10 % bis 40 % auf und besitzen eine Porengröße von 5 µm bis 30 µm. Das Sintem von Wolfram und Molybdän bei 1900°C bzw. bei 1800°C führt dazu, daß im Einsatz in der Glasschmelze bei Temperaturen unterhalb ~ 1600°C kein Nachsintern zu erwarten ist. Das Dichtsintem von Platin-Rhodium-Legierungen und Rhodium beim Einsatz in der Glasschmelze kann ebenfalls verhindert werden, wenn die Fritten in entsprechender Weise bei Temperaturen oberhalb 1600°C gesintert werden. Zusätzlich erweisen sich Platin-Rhodium-Legierungen mit einem hohen Rhodium-Anteil (> 20 Gew.%) in der Anwendung bei Temperaturen um 1500°C stabil gegenüber dem Nachsintern in der Glasschmelze. Die Stabilität gegen Nachsintern der Edelmetallfritten hängt ab von der Ausgangskorngröße des Edelmetallpulvers und der Sintertemperatur. Reine Rhodium Fritten weisen die höchste Stabilität auf.

Blasen können auch mit durchströmten dicht gewebten Netzkörpern aus Platin-Rhodium-Legierungen erzeugt werden. Der Netzkörper ist aus mehreren Netzschichten aufgebaut. Die einzelnen Schichten besitzen unterschiedliche Maschenweiten. Die der Glasschmelze zugewandte Seite weist die geringste Maschenweite auf (< 1 *µ*m). Die darunter liegenden Schichten dienen als Trag- und Stützkonstruktion. Ein Dichtsintem kann ebenfalls verhindert werden, wenn zuvor bei hohen Temperaturen geglüht wird und Legierungen mit einem hohen Rhodium-Anteil eingesetzt werden. Ein Vorteil von Fritten oder Netzkörpem aus Platin-Rhodium-Legierungen gegenüber Wolfram und Molybdän stellt die geringe Empfindlichkeit gegenüber Oxidation durch Sauerstoff dar.

Ein Verschließen der Poren durch Infiltration mit schmelzflüssigem Glas wird nicht beobachtet. Durch direkten Stromfluß (Widerstandsbeheizung) kann die Fritte oder der Netzkörper zusätzlich beheizt werden, so daß die Viskosität des Glases an der Grenzfläche weiter herabgesetzt werden kann und die Bildung von kleineren Blasen bevorzugt ist.

Untersuchungen durchströmter Fritten und Netzkörper wurden in einer Modellflüssigkeit (PEG/Wasser) durchgeführt. Die Viskosität der Modellflüssigkeit wurde über einen weiteren Bereich variiert, und überdeckte den Bereich der Viskosität einer Glasschmelze (*η* ~ 1 Pas bis *η* ~ 10 Pas). Blasen mit einem Durchmesser von ~ 1 mm bis ~ 20 mm werden gebildet, und können durch den Durchfluß bzw. durch den Arbeitsdruck eingestellt werden.

Die Vorteile der Anwendung von metallischen Materialien gegenüber keramischen Materialien liegen im folgenden:
* Verglichen mit porösen keramischen Fritten zeigen Fritten aus Mo, W oder Edelmetallen eine gute Korrosionsbeständigkeit in der Glasschmelze, und können zusätzlich im direkten Stromfluß (Widerstandsbeheizung) beheizt werden.
* Besonders vorteilhaft sind Edelmetallfritten oder Netzkörper, da sie den Einsatz von Sauerstoff haltigem Spülgas erlauben.

Insgesamt gesehen weist die Erfindung die folgenden Vorteile auf:
* Örtlich gezieltes Einbringen von kleinen Blasen.
* Schaffung einer großen spezifischen Kontakt- bzw. Austauschfläche zwischen Blase und Schmelze - gute Läuterwirkung.
* Hinsichtlich der Entwicklung von Unterdruckläuterverfahren hat diese Methode Anwendungspotential. Diese Methode kann genutzt werden, um kleine Blasen, die als Keimbildner wirken, vor dem Einlauf der Unterdruckeinheit in die Schmelze einzubringen.
* Kein Einbringen oder Freisetzen von toxischer oder umweltgefährdeter Stoffe.

Die folgende Tabelle gibt praktische Erfahrungen wieder, die mit unterschiedlichen keramischen Materialien gemacht wurden:

| Filtertyp | Material | Porengröße [µm] | Blasen-ø [m] | Beobachtungen |
|---|---|---|---|---|
| L3-SiC | Silicium-Carbid | 1 | 1 | Es bilden sich viele feine Blasen gleichmäßig über der gesamten Filterfläche. |
| SiC | Silicium-Carbid | 100 | 5 - 10 | Die meisten Blasen sammeln sich kurz über dem Filter und steigen als Klumpen oder Riesenblase hoch. |
| A 253 - Al₂O₃ | Aluminium-Oxid | 100 | 10 und > | MurmelgroBe Blasen steigen einzeln hoch. |
| S 910 | Silicium-Carbid | 100 | 10 und > | Der Druck ändert sich nicht mit zunehmendem Durchfluß. Sehr große Blasen steigen einzeln oder als Gruppe hoch. |
| Al 25 | Aluminium-Oxid | 5 - 20 (20 - 30 %) | 2 - 20 | Die meisten Blasen vereinen sich kurz über dem Filter und steigen als sehr große Blase hoch. |
| Quarzal | Silicium-Dioxid | ? (9 - 12 %) | 1 | Die Blasen steigen in erster Linie an der Grenze von Gummidichtung zu Filter auf. Das Gas scheint nicht durch das Quarzal zu gehen. |
| Alsint-Rohr | Aluminium-Oxid | 1,5 | 1 - 2 | Es tritt ein sehr dichter, gleichmäßiger Blasenpelz mit feinen Blasen aus der Rohroberfläche. Sie treten auch noch bei fallendem Druck (nach Ausschalten) gleichmäßig aber langsamer aus. |
| Al₂O₃- Rohr | Aluminium-Oxid | | | Die Blasen treten gleichmäßig und klein (Durchmesser ca. 1 mm) aus der Oberfläche. |
| Silimantin 60 - Rohr | Aluminium-Silicat | 2 | 1 - 2 | Ähnlich wie Alsint-Rohr. Es scheint, wenn einmal Gas durch den Filter strömt, treten die Blasen kontinuierlich aus. |
| Silimantin 60 NG- Rohr | Aluminium-Silicat | 8 - 9 | 1 - 3 | Bei 2 I/min ähnlich wie obengenannt. |
| | | | | Bei 4 I/min steigen die Blasen schneller hoch. Wegen der hohen Geschwindigkeit gehen sie zusammen und werden dadurch größer. |
| SiC-Rohr | Silicium-Carbid | ? (ca. 10%) | 2-4 | Feine Blasen treten überall gleichmäßig aus. Bei 6 I/min so schnell, daß sie sich wie obengenannt sammeln. |

Die Efindung istanhand der Zeichnungen erläutert. Darin ist im einzelnen folgendes dargestellt:
- Figur 1: zeigt ein Läutergefäß in Gestalt eines Platintiegels mit scheibenförmigem Porenkörper.
- Figur 2: zeigt ein Läutergefäß, wiederum in Gestalt eines Platintiegels, mit einem Porenkörper in Gestalt eines Rohres.
- Figur 3: zeigt eine Anlage zum Erschmelzen und Läutern mit einem porösen Läuterwannenboden.
- Figur 4: zeigt eine Anlage zum Erschmelzen und Läutern mit porösen Bubbling-Rohren.

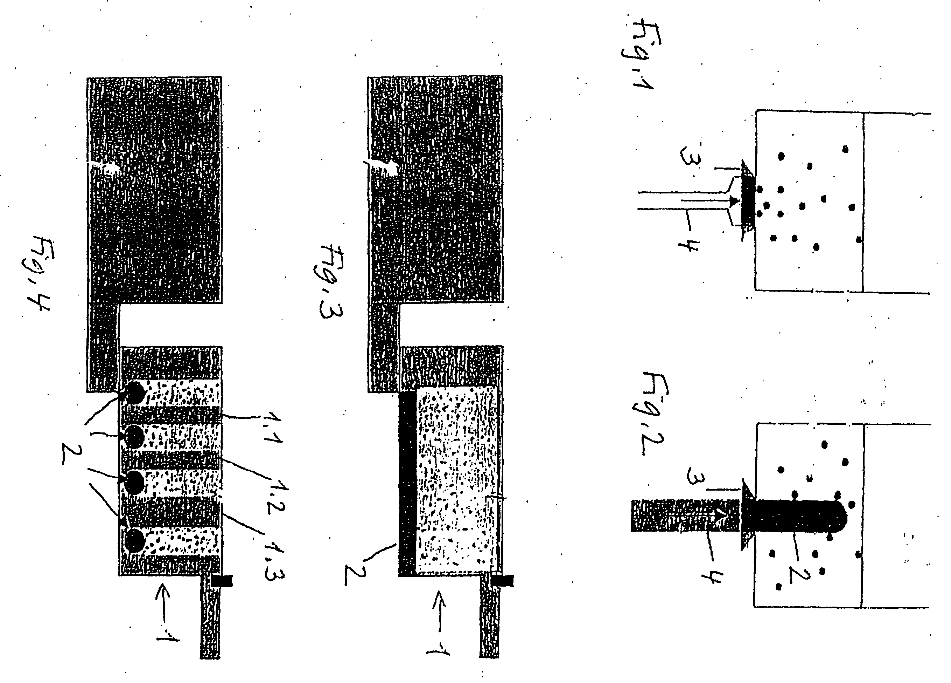

Der in Figur 1 gezeigte Tiegel 1 enthält eine Glasschmelze. Er weist einen Porenkörper 2 auf, der eine plattenförmige Gestalt hat. Der Porenkörper 2 ist als Kreisscheibe ausgebildet und sitzt in einer entsprechenden Aussparung im Platintiegel 1. Er ist an seinem Umfang durch einen Feuerfestkleber gegen den Boden des Platintiegels 1 abgedichtet.

Der Porenkörper 2 ist an einem hier nicht gezeigten Druckgasbehälter über eine Zuleitung 4 angeschlossen. Der Druckgasbehälter enthält beispielsweise Druckluft oder Sauerstoff.

Der in Figur 2 gezeigte Platintiegel 1 ist mit einem Porenkörper versehen, der die Gestalt einer Hülse aufweist. Die Hülse ist an ihrem oberen Ende abgeschlossen, und an ihrem unteren Ende offen, so daß wiederum über eine Zuleitung 4 Gas in das Innere der Hülse 2 eingeführt werden kann. Auch hier ist wiederum ein Feuerfestkleber 3 als Abdichtung vorgesehen.

Bei der Ausführungsform gemäß Figur 3 ist einer Läuterwanne 1 eine Einschmelzwanne 5 vorgeschaltet. Die Läuterwanne 1 weist einen porösen Boden 2 auf. Dieser Boden stellt somit den Porenkörper gemäß der Erfindung dar.

Bei der Ausführungsform gemäß Figur 4 ist einer Läuterwanne 1 wiederum eine Einschmelzwanne 5 vorgeschaltet. Die Läuterwanne 1 ist mit Trennwänden 1.1, 1.2, 1.3 versehen, die den Innenraum der Läuterwanne 1 in Kammern unterteilen. Am Boden der Kammern liegen Rohre 2 aus porösem Material. Diese dienen als Bubbling-Rohre gemäß der Erfindung. Diese laufen im folgenden Falle horizontal.

Es kann auch vorteilhaft sein, bereits in der Einschmelzwanne das Feinbubbling einzusetzen, um direkt beim Einschmelzen Gase hiermit auszutreiben.

Ideale Bubbling-Läutergase sind Sauerstoff oder Helium. Sowohl Sauerstoff als auch Helium sind Gase, die von der Schmelze selbst nach der Phase des Bubbling sehr gut resorbiert werden können und damit gute Blasenqualitäten ermöglichen. Insbesondere bei metallischen Fritten kann Helium von Vorteil sein, da es keine oxidierende Wirkung auf das Frittenmaterial hat.

## Patentansprüche

1. Verfahren zum Läutern einer Glasschmelze;
1.1 mit einem Blasenspender zum Erzeugen von Gasblasen von einer externen Gasquelle sowie zum Einleiten dieser Gasblasen in die Schmelze;
1.2 mit einer dem Blasenspender vorgeschalteten Druckgasquelle;
1.3 der Blasenspender umfasst einen Porenkörper mit offenen Poren;
1.4 die Poren des Porenkörpers 2 haben einen mittleren Durchmesser von weniger als 0,5 mm;
1,5 durch die Einstellung des Durchflussvolumens und/oder des Arbeitsdrucks des von der Druckgasquelle dem Porenkörpers zugeleiteten Gases wird ein Blasendurchmesser von < 20 mm eingestellt.

2. Verfahren nach Anspruch 1, **dadurch gekennzeichnet, dass** die Poren des Porenkörpers 2 einen mittleren Durchmesser von weniger als 100 µm haben.

3. Verfahren nach Anspruch 1 oder 2, **dadurch gekennzeichnet, dass** der Porenkörper 2 scheiben- oder propfenförmig ist.

4. Verfahren nach Anspruch 1 oder 2, **gekennzeichnet durch** die folgenden Merkmale:
4.1 der Porenkörper (2) ist hülsenförmig;
4.2 der Porenkörper (2) ist derart in ein Läutergefäß (1) einbaubar, dass er in die Schmelze hineinragt;
4.3 der Porenkörper (2) ist mit seinem einen Ende an die Druckquelle anschließbar, während sein anderes Ende geschlossen ist.

5. Verfahren nach einem der Ansprüche 1 bis 4, **dadurch gekennzeichnet, dass** der Porenkörper (2) aus porösem Material besteht.

6. Verfahren nach einem der Ansprüche 1 bis 4, **dadurch gekennzeichnet, dass** der Porenkörper (2) eine Geflecht-, Gewebe-, Netz- oder Gitterstruktur aufweist.

7. Verfahren nach einem der Ansprüche 1 bis 6, **dadurch gekennzeichnet, dass** der Porenkörper (2) aus keramischen Material besteht.

8. Verfahren nach Anspruch 7, **dadurch gekennzeichnet, dass** der Porenkörper (2) aus einem der folgenden Materialien besteht:
Silicium-Carbid
Aluminium-Oxid
Silicium-Dioxid
Aluminium-Silicat

9. Verfahren nach einem der Ansprüche 1 bis 6, **dadurch gekennzeichnet, dass** der Porenkörper (2) aus einem Metall besteht.

10. Verfahren nach Anspruch 9, **dadurch gekennzeichnet, dass** der Porenkörper (2) aus einem der folgenden Metalle besteht:
Wolfram
Molybdän
Platin
Iridium
oder einer Legierung aus diesen Metallen.

11. Verfahren nach Anspruch 9 oder 10, **dadurch gekennzeichnet, dass** der Porenkörper (2) elektrisch beheizbar ist.

12. Verfahren nach einem der Ansprüche 1 bis 11, **dadurch gekennzeichnet, dass** die Läuterung der Glasschmelze in einem Läutergefäß durchgeführt wird.

13. Verfahren zum Läutern einer Glasschmelze nach Anspruch 1 bis 11, **dadurch gekennzeichnet, dass** als Bubblinggas Sauerstoff verwendet wird,

14. Verfahren zum Läutern einer Glasschmelze nach Anspruch 1 bis 11, **dadurch gekennzeichnet, dass** als Bubblinggas Helium verwendet wird.

## Claims

1. A method for refining a glass melt;
1.1 with a bubble generator for producing gas bubbles from an external gas source and for introducing these gas bubbles into the melt;
1.2 with a compressed gas source connected upstream of the bubble generator;
1.3 with the bubble generator comprising a porous body with open pores;
1.4 with the pores of the porous body 2 having a mean diameter of less than 0.5 mm;
1.5 with a bubble diameter of < 20 mm being set by setting the flow volume and/or the working pressure of the gas supplied by the compressed gas source to the porous body.

2. A method according to claim 1, **characterized in that** the pores of the porous body 2 have a mean diameter of less than 100 µm.

3. A method according to claim 1 or 2, **characterized in that** the porous body 2 is disk-like or plug-like.

4. A method according to claim 1 or 2, **characterized by** the following features:
4.1 the porous body (2) is sleeve-like;
4.2 the porous body (2) can be installed in such a way in the refining vessel (1) that it projects into the melt;
4.3 the porous body (2) can be connected with its one end to the pressure source, whereas its other end is closed.

5. A method according to one of the claims 1 to 4, **characterized in that** the porous body (2) consists of porous material.

6. A method according to one of the claims 1 to 4, **characterized in that** the porous body (2) has a braided, woven, net-like or grating structure.

7. A method according to one of the claims 1 to 6, **characterized in that** the porous body (2) consists of a ceramic material.

8. A method according to claim 7, **characterized in that** the porous body (2) consists of one of the following materials: silicon carbide, aluminium oxide, silicon dioxide, aluminium silicate.

9. A method according to one of the claims 1 to 6, **characterized in that** the porous body (2) consists of a metal.

10. A method according to claim 9, **characterized in that** the porous body (2) consists of one of the following metals: tungsten, molybdenum, platinum, iridium, or an alloy made of these metals.

11. A method according to claim 9 or 10, **characterized in that** the porous body (2) can be heated electrically.

12. A method according to one of the claims 1 to 11, **characterized in that** the refining of the glass melt is carried out in a refining vessel.

13. A method for refining a glass melt according to claims 1 to 11, **characterized in that** oxygen is used as a bubbling gas.

14. A method for refining a glass melt according to claims 1 to 11, **characterized in that** helium is used as a bubbling gas.

## Revendications

1. Procédé pour purifier une masse de verre en fusion
1.1 avec un générateur de bulles destiné à produire des bulles de gaz à partir d'une source de gaz externe et à amener ces bulles de gaz dans la masse en fusion ;
1.2 avec une source de gaz sous pression montée en amont du générateur de bulles ;
1.3 le générateur de bulles comprend un élément poreux à pores ouverts ;
1.4 les pores de l'élément poreux (2) ont un diamètre moyen inférieur à 0,5 mm;
1.5 le réglage du débit et/ou de la pression de service du gaz amené de la source de gaz sous pression à l'élément poreux permet d'ajuster le diamètre des bulles à moins de 20 mm.

2. Procédé selon la revendication 1, **caractérisé en ce que** les pores de l'élément poreux (2) ont un diamètre moyen inférieur à 100 µm.

3. Procédé selon la revendication 1 ou 2, **caractérisé en ce que** l'élément poreux (2) est en forme de disque ou de bouchon.

4. Procédé selon la revendication 1 ou 2, **caractérisé en ce que** :
4.1 l'élément poreux (2) a la forme d'un manchon ;
4.2 l'élément poreux (2) peut être monté dans la cuve de purification (1) de façon à dépasser dans la masse en fusion ;
4.3 l'élément poreux (2) peut être raccordé par une extrémité à la source de pression, tandis que son autre extrémité est fermée.

5. Procédé selon l'une quelconque des revendications 1 à 4, **caractérisé en ce que** l'élément poreux (2) est fait de matériau poreux.

6. Procédé selon l'une quelconque des revendications 1 à 4, **caractérisé en ce que** l'élément poreux (2) possède une structure tressée, tissée, réticulée ou grillagée.

7. Procédé selon l'une quelconque des revendications 1 à 6, **caractérisé en ce que** l'élément poreux (2) est fait de matériau céramique.

8. Procédé selon la revendication 7, **caractérisé en ce que** l'élément poreux (2) est fait de l'un des matériaux suivants :
carbure de silicium
oxyde d'aluminium
dioxyde de silicium
silicate d'aluminium

9. Procédé selon l'une quelconque des revendications 1 à 6, **caractérisé en ce que** l'élément poreux (2) est fait d'un métal.

10. Procédé selon la revendication 9, **caractérisé en ce que** l'élément poreux (2) est fait de l'un des métaux suivants :
tungstène
molybdène
platine
iridium
ou d'un alliage de ces métaux.

11. Procédé selon la revendication 9 ou 10, **caractérisé en ce que** l'élément poreux (2) peut être chauffé par des moyens électriques.

12. Procédé selon l'une quelconque des revendications 1 à 11, **caractérisé en ce que** la purification de la masse de verre en fusion est réalisée dans une cuve de purification.

13. Procédé pour la purification d'une masse de verre en fusion selon les revendications 1 à 11, **caractérisé en ce que** le gaz de barbotage utilisé est de l'oxygène.

14. Procédé pour la purification d'une masse de verre en fusion selon les revendications 1 à 11, **caractérisé en ce que** le gaz de barbotage utilisé est de l'hélium.
